# FASCICULE DE BREVET EUROPEEN

(11) **EP 0 409 723 B1**
(45) Date de publication et mention de la délivrance du brevet: **13.10.1993**
(21) Numéro de dépôt: 90402058.3
(22) Date de dépôt: 17.07.1990
(51) Int. Cl.: B27C 9/02, B23Q 37/00

(54) **Machine à bois à outils multiples modulaires**
Holzbearbeitungsmaschine mit mehreren modularen Werkzeugen
Multi-purpose woodworking machine with modular tools

(30) Priorité: 20.07.1989 FR 8909799
(43) Date de publication de la demande: 23.01.1991
(73) Titulaire: LUREM S.A., F-61700 Domfront (FR)
(72) Inventeur: Dobignard, Patrice, F-61600 La Ferté-Macé (FR)
(74) Mandataire: Polus, Camille

(56) Documents cités:
- EP-A- 0 121 609
- DE-A- 2 819 033
- DE-C- 937 011
- US-A- 1 506 154
- US-A- 2 759 507
- US-A- 2 813 432
- US-A- 3 036 608
- US-A- 4 265 283

## Description

La présente invention concerne une machine à bois à outils multiples modulaires.

On connaît des machines à bois possédant un bâti sur lequel est fixé un moteur électrique, un plan de travail horizontal et différents outils entraînés en rotation par le moteur.

Le brevet US-A-1.506.154 décrit une telle machine à bois à outils multiples modulaires comportant un bloc de travail délimitant un plan de travail et comportant des moyens de positionnement, de fixation et d'entraînement d'un desdits outils modulaires, le bloc de travail étant monté pivotant sur un châssis autour d'un axe horizontal, entre une position de rangement dans laquelle le bloc de travail s'étend verticalement et une position de travail dans laquelle il s'étend horizontalement pour recevoir l'un desdits outils modulaires.

Dans le dispositif connu, le nombre d'applications possibles demeure limité. L'invention a pour but de remédier à cet inconvénient.

A cet effet, l'invention a pour objet une machine à bois à outils multiples modulaires telle que faison l'objet de la revendication 1.

D'autres caractéristiques avantageuses resortent des revendications dépendantes.

L'invention sera mieux comprise à la lecture de la description détaillée qui va suivre faite en référence aux dessins annexés sur lesquels :
- La figure 1 est une vue en perspective de l'ensemble support en position de rangement, montrant la face supérieure du bloc de travail,
- la figure 2 est une vue en perspective de l'ensemble support représenté à la figure 1, montrant la face inférieure du bloc de travail,
- la figure 3 représente une vue en perspective de l'ensemble support en position de travail, montrant la face avant de l'ensemble support,
- la figure 4 est une vue en perspective de l'ensemble support en version de rabotage,
- la figure 5 est une vue en perspective éclatée d'un détail montrant la table coulissante et son installation sur le bloc téléscopique,
- la figure 6 est une vue schématique représentant par l'arrière, les moyens de positionnement du bloc téléscopique,
- la figure 7 est une vue schématique de dessus des moyens de positionnement du bloc téléscopique, le bloc téléscopique ayant été enlevé,
- la figure 8 est une vue de la face arrière d'un outil formant scie adaptable sur le bloc support,
- la figure 9A est une vue de face en perspective de l'ensemble support équipé de la scie représentée à la figure 8,
- la figure 9B est une vue en perspective latérale de l'ensemble support équipé de la scie,
- la figure 10 est une vue en perspective partielle de l'ensemble support équipé d'un outil de perçage, ou mortaisage,
- la figure 11 est une vue en perspective montrant une face arrière d'un accessoire utilisé pour le perçage, mortaisage,
- la figure 12 est une vue en perspective de la face avant de l'accessoire représenté sur la figure 11,
- la figure 13 est une vue en perspective montrant la face avant d'un outil formant toupie verticale,
- la figure 14 est une vue partielle en perspective latérale de la toupie verticale représentée à la figure 13,
- la figure 15 est une vue de la face arrière de la toupie représentée à la figure 13,
- la figure 16 est une vue en perspective avant d'un outil formant toupie horizontale fixé sur l'ensemble support,
- la figure 17 est une vue en perspective représentant un protecteur destiné à être utilisé avec les toupies représentées aux figures 13 et 16,
- la figure 18 est une vue en perspective d'un détail d'un accessoire de guidage utilisé avec la toupie représentée à la figure 16,
- la figure 19 est une vue en perspective montrant l'organe de commande du réglage de la hauteur de la toupie horizontale représentée à la figure 16,
- la figure 20 est une vue de dessous en perspective d'un outil formant dégauchisseuse raboteuse,
- la figure 21 est une vue en perspective d'un détail de l'outil formant dégauchisseuse raboteuse en utilisation dégauchisseuse, le moteur d'entraînement des rouleaux de l'outil et le protecteur étant supprimés,
- la figure 22 est une vue en perspective représentant un protecteur utilisé avec l'outil formant dégauchisseuse raboteuse.

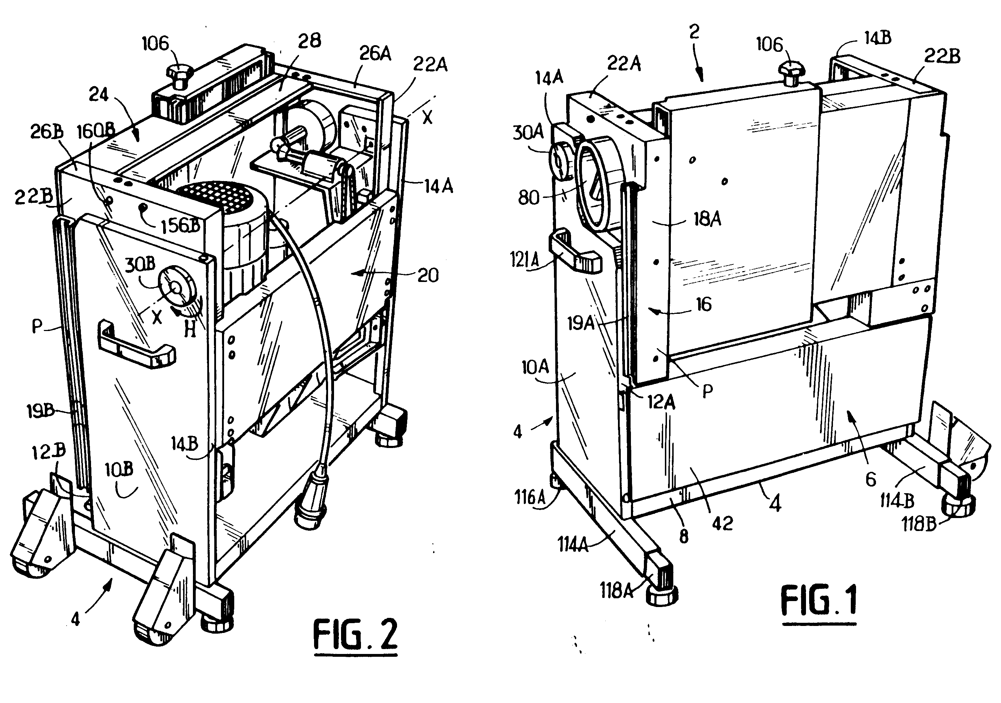

Sur les figures 1 et 2 on a représenté un ensemble support 2 selon l'invention, en position de rangement.

L'ensemble support 2 comporte un châssis 4 dans lequel est reçu un bloc de travail 6.

Le châssis 4 comporte une assise 8 rectangulaire dont le petit côté constitue la profondeur du châssis et le grand côté la longueur de celui-ci. Deux montants plats rectangulaires 10A et 10B sont érigés verticalement sur les petits côtés de l'assise 8 et possèdent un bord avant 12A, 12B et un bord arrière 14A, 14B respectivement. La longueur des bords arrières définit la hauteur du châssis qui détermine ainsi un volume parallélépipédique rectangle dans lequel est reçu le bloc de travail 6.

Le bloc de travail 6 possède une forme de parallélépipède rectangle délimité par une face principale supérieure 16 (voir figure 1) constituée en partie de deux parties fixes 18A, 18B du bloc définissant un plan de référence P, et une face principale inférieure 20 (voir figure 2).

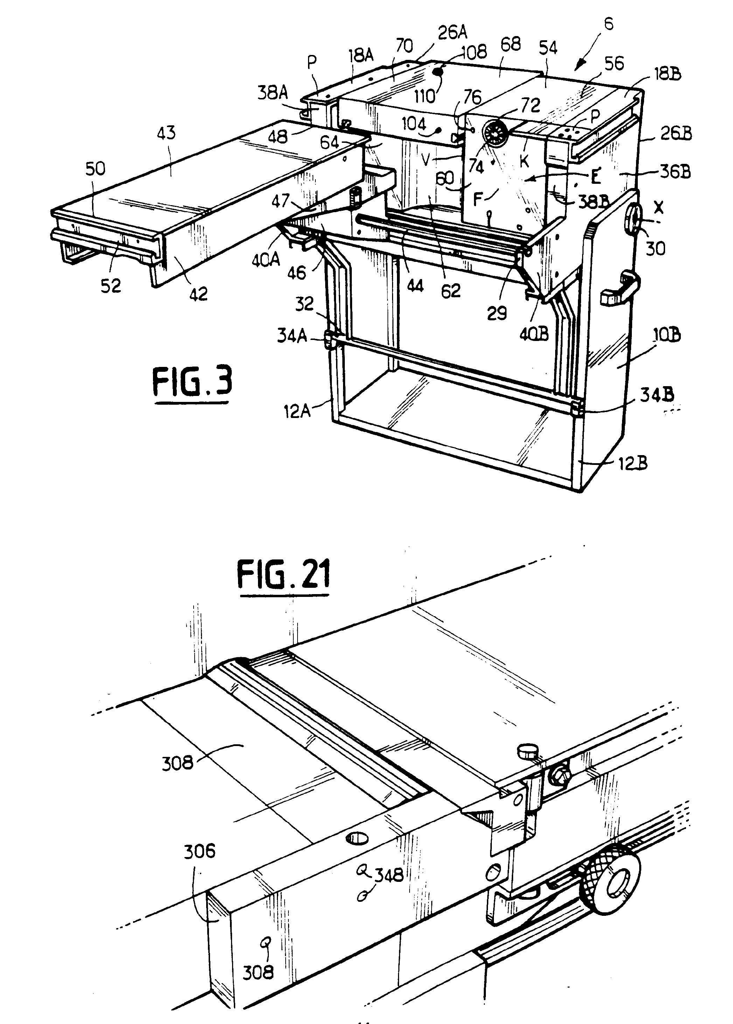

L'épaisseur du bloc 6 est délimitée par deux plaques latérales 22A et 22B, une face arrière 24 (voir figure 2) comportant les bords arrière 26A et 26B des plaques latérales et une entretoise 28 reliant les bords arrière, et une face avant 29 (voir figure 3).

En position de rangement les plaques latérales 22A et 22B sont situées contre les faces internes des montants 10A et 10B respectivement, pour former un ensemble compact s'étendant principalement verticalement.

La partie fixe 18A est constituée d'une bande recouvrant le bord supérieur de la plaque latérale 22A. La bande s'étend depuis la face interne de la plaque 22A au-delà de la face externe de la plaque 22A, et comporte venue de matière une glissière 19A en forme de C s'étendant le long de la face externe de la plaque 22A.

La partie fixe 18B est une partie rectangulaire s'étendant perpendiculairement à la plaque 22B et au-delà de la face interne de celle-ci. La partie fixe 18B s'étend également au-delà de la face externe de la plaque 22B de manière à former un élément de glissière 19B ayant le même profil que la glissière 19A.

Les plaques 22A et 22B sont montées rotatives sur les montants 10A et 10B à l'aide deux paliers 30A et 30B coaxiaux d'axe X-X (voir figure 2) prévus dans un angle supérieur des montants 10A et 10B, l'axe X-X constituant ainsi un axe de pivotement du bloc de travail 6 s'étendant parallèlement à la longueur L du châssis 4.

L'axe X-X traverse les plaques latérales 22A et 22B en un point situé à proximité de la face principale inférieure 20 et plus proche de la face arrière 24 que de la face avant 29 du bloc de travail 6 (voir fig.3).

Par pivotement du bloc 6 de 90° autour de l'axe X-X dans le sens horaire H en regardant la figure 2, le bloc est mis en position de travail comme représenté sur la figure 3.

Sur la figure 3 on constate que, compte tenu de la position du palier 300 déjà décrite, le bloc 6 est en porte-à-faux par rapport à l'axe X-X et au châssis 4.

Pour assurer le maintien en position de travail du bloc 6, une béquille 32 en forme de U est montée articulée par l'extrémité de ses branches latérales sur les plaques latérales 22A et 22B de manière telle que la branche inférieure du U repose dans des taquets 34A et 34B prévus sur les bords avant 12A et 12B des montants 10A et 10B. L'articulation est telle qu'en position de rangement la base du U vient à peu près dans le plan de la face avant 29 du bloc 6.

Les plaques latérales comportent une partie rectangulaire 36A, 36B s'étendant depuis leur bord arrière 26A et 26B jusqu'à un bord avant 38A et 38B respectivement. Les bords avant 38A et 38B et arrière 26A et 26B sont perpendiculaires au plan de référence P défini par les parties fixes 18A et 18B du bloc.

Chaque plaque latérale comporte un prolongement 40A, 40B respectivement s'étendant vers l'avant depuis le bord avant 38A, 38B jusqu'à la face avant 29 du bloc de travail 6. Chacun des prolongements s'étend dans le plan des faces latérales du bloc 6 depuis la face principale inférieure, et possède une hauteur plus petite que le bord avant 38A, 38B, délimitant ainsi un espace E parallélépipédique situé entre le plan P et l'arête supérieure des prolongements 40A, 40B et s'étendant horizontalement et longitudinalement entre les faces internes de chacune des plaques latérales et transversalement entre les bords avant 38a et 38b des plaques latérales et la face avant 29 du bloc 6.

Dans cet espace E est reçue une table mobile 42 ayant une face supérieure 43 plane rectangulaire située dans le plan P (voir figure 1).

La table mobile 42 est montée mobile sur une barre de chariotage 44 fixée entre les prolongements 40A et 40B à proximité de leur arête supérieure et de la face avant 29 du bloc 6. La barre de chariotage 44 est perpendiculaire aux plaques latérales 22A et 22B.

Sur la barre de chariotage 44 est monté coulissant un chariot 46 sur lequel est monté pivotant un support 47.

A proximité de l'un de ses petits côtés 48, la table 42 est montée en porte-à-faux sur le support 47 de manière à pouvoir coulisser longitudinalement sur une partie de celui-ci. Le petit côté 50 de la table 42, opposé au petit côté 48 situé au-dessus du support 47, comporte une glissière 52 constituée d'un profilé en forme générale de C identique à la glissière 19A, dont la face supérieure est située dans le plan de la face 43.

Entre les parties rectangulaires 36A et 36B des plaques latérales 22A et 22B est monté un bloc téléscopique 54.

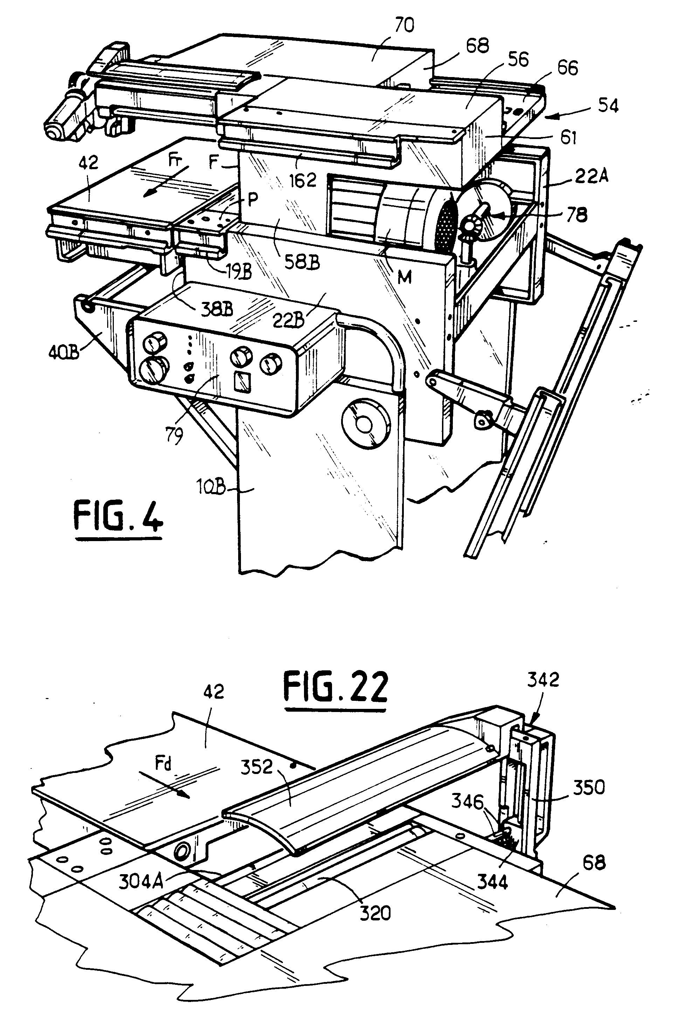

Le bloc téléscopique 54 peut coulisser verticalement entre une position basse (voir figure 3) dans laquelle sa face supérieure plane 56 se trouve dans le plan P et une position haute (voir figure 4) dans laquelle la face 56 se trouve au-dessus du plan P.

La face inférieure du bloc téléscopique 54 est décalée vers le haut par rapport à la face principale inférieure du bloc de travail. Le bloc téléscopique est un volume creux possédant deux parois latérales 58A et 58B adjacentes aux faces internes des plaques latérales 22A et 22B et une paroi transversale avant 60 verticale dont la face externe délimite une face de référence F plane et verticale et une paroi arrière 61 (voir Fig. 4). La face F est décalée vers l'arrière à partir des bords avant 38A et 38B comme représenté sur la figure 4.

La face F s'étend depuis la face interne de la plaque latérale 22B jusqu'à un plan vertical V parallèle aux plaques latérales et situé entre celles-ci.

A partir de ce plan V (voir figure 3) la paroi transversale 60 comporte un évidement semi-cylindrique 62 d'axe vertical parallèle au plan V, puis une partie plane verticale 64 située entre l'évidement 62 et la face interne de la plaque latérale 22A.

Un logement possédant une face supérieure et une face avant ouvertes est ainsi délimité par la paroi transversale avant 60 du bloc téléscopique et les faces internes des plaques latérales 22A et 22B faisant saillie vers l'avant à partir de ladite paroi transversale avant 60, jusqu'aux bords avant 38A et 38B.

Verticalement l'évidement 62 et la partie plane 64 s'étendent sur une même hauteur plus petite que la hauteur de la face F. A partir du bord supérieur horizontal de l'évidement 62 et de la partie plane 64 s'étend horizontalement vers l'arrière une plaque 66 horizontale (voir figure 4) jusqu'à la face arrière 61 du bloc téléscopique.

Au-dessus de la plaque 66 est montée une table coulissante 68 dont la face supérieure 70 est coplanaire à la face supérieure 56 du bloc téléscopique (voir figures 3 et 4).

La table coulissante 68 est rectangulaire, sa largeur s'étendant entre le plan vertical V et la face externe de la paroi latérale 58A du bloc téléscopique, sa longueur étant à peu près égale à la distance entre les bords avant et arrière des plaques latérales 22A, 22B du bloc de travail 6. Ainsi la longueur de la table coulissante est supérieure à celle des parois latérales 58A et 58B du bloc téléscopique (voir Fig. 3).

La table coulissante 68 est montée coulissante d'avant en arrière sur la plaque 66 pour un mouvement entre deux positions fixées comme cela sera décrit plus loin.

Sur la figure 4, on constate qu'un moteur électrique M est fixé dans le volume défini par le bloc téléscopique 54, l'axe du moteur étant perpendiculaire à la face de référence F. Un dispositif de liaison (non représenté) conventionnel relie l'axe du moteur M à un arbre creux 72 traversant la paroi avant du bloc téléscopique et possédant une couronne dentée 74 située à son extrémité libre (voir figure 3). Les dents de la couronne dentée 74 sont des dents radiales s'étendant à peu près dans le plan de la face F, à proximité du plan V et de la face supérieure 56 du bloc téléscopique 54 (voir figure 3).

Sur la face F sont percés perpendiculairement à celle-ci, deux trous 76 de guidage et de positionnement d'un outil amovible. Les trous 76 possèdent un axe situé dans le même plan horizontal que l'axe de l'arbre creux 72 et sont situés de part et d'autre de ce dernier.

Dans le volume du bloc téléscopique sont également fixés des moyens d'entraînement en coulissement 78 du bloc téléscopique, ces moyens étant en partie représentés sur la figure 4.

Sur la figure 4 on constate également qu'un boîtier de commande 79 est monté pivotant sur le montant 10B du châssis. En position de rangement le boîtier 79, par rotation est amené à l'intérieur du volume délimité par le bloc de travail.

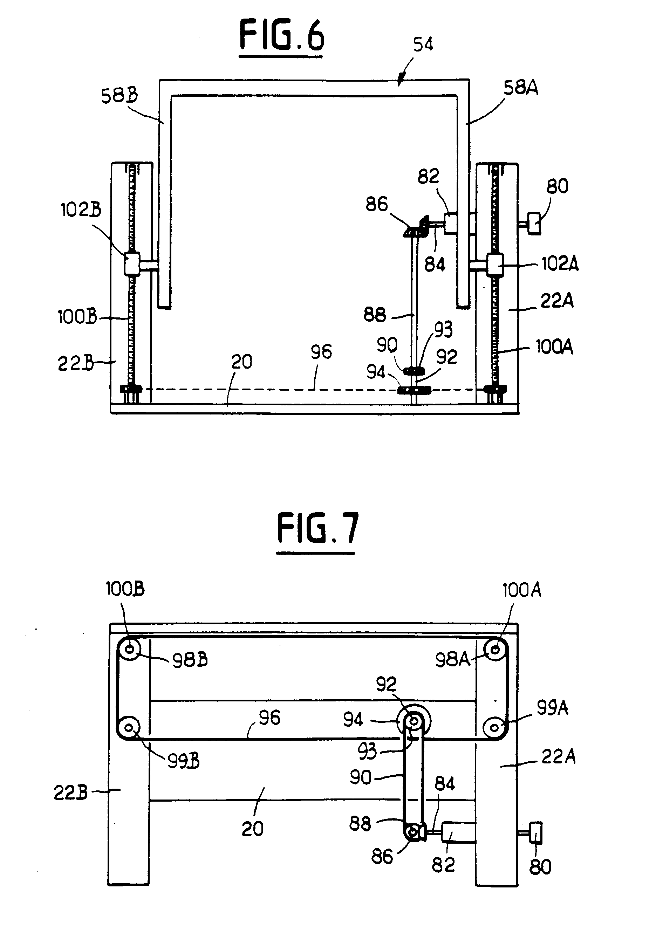

Les moyens d'entraînement 78 sont représentés plus en détail sur les figures 6 et 7. Ils comportent un volant de commande 80 faisant saillie à l'extérieur de la plaque latérale 22A. Le volant 80, en position de rangement est reçu dans une découpe du montant 10A du châssis (voir figure 1).

Le volant 80 est relié à une unité de démultiplication 82 située coaxialement au volant sur la face interne de la plaque 22A et possèdant un axe de sortie horizontal 84. A l'extrémité de l'axe 84 est prévu un renvoi d'angle 86 pour renvoyer le mouvement rotatif vers l'entretoise 20 à l'aide d'un arbre 88.

Un arbre 92 vertical est monté rotatif sur l'entretoise 20. Des roues dentées 93 situées dans un même plan horizontal sont solidaires des extrémités libres des arbres 88 et 92. Une première chaîne 90 sans fin relie les arbres 88 et 92 par l'intermédiaire des roues dentées 93.

L'arbre 92 comporte une autre roue dentée 94 décalée verticalement vers le bas par rapport à la roue dentée 93. La roue dentée 94 entraîne une seconde chaîne sans fin 96 qui coopère avec quatre roues dentées 98A et 98B, 99A et 99B situées dans un même plan horizontal.

Les roues dentées 99A et 99B sont montées libres en rotation autour d'un axe vertical s'élevant à partir de la base de chaque plaque latérale 22A et 22B. Les roues dentées 98A et 98B sont solidaires chacune d'une tige filetée 100A et 100B verticale située vers l'avant des plaques latérales 22A et 22B respectivement, et fixée dans l'épaisseur desdites plaques latérales.

Deux parties filetées intérieurement 102A et 102B sont solidaires des parois latérales 58A et 58B du bloc téléscopique et entourent les tiges filetées 100A et 100B respectivement (voir fig. 6).

Par rotation manuelle du volant 80, les moyens d'entraînement 78 font tourner les tiges filetées 100A et 100B qui, lors de cette rotation, font coulisser verticalement les parois latérales 58A et 58B du bloc téléscopique 54 à l'aide des parties filetées 102A et 102B.

Il est à noter que la rotation du volant 80 peut être effectuée à l'aide d'un moteur auxiliaire.

Sur la figure 3, on constate que la table coulissante 68 du bloc téléscopique comporte une tige filetée 104 faisant saillie sur sa face avant, pouvant être tournée à l'aide d'un organe de commande 106 situé sur la face arrière de la table coulissante 68 (voir figure 1). La tige filetée 104 est destinée à coopérer avec une partie de chaque outil amovible comme cela sera décrit ultérieurement.

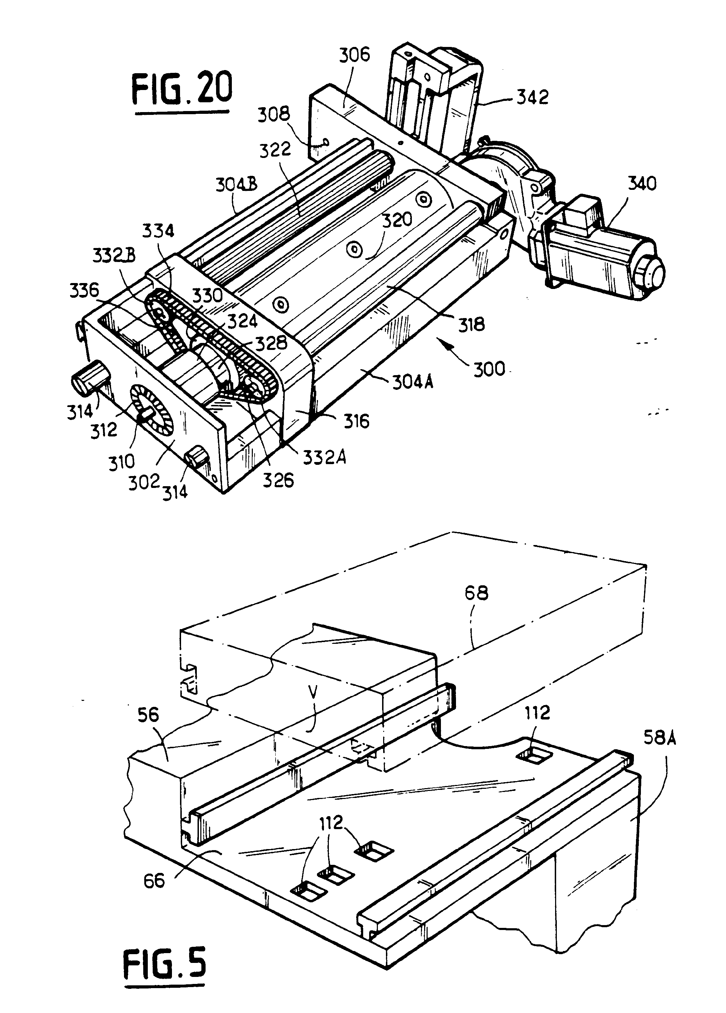

La table coulissante 68 comporte également des moyens de blocage en position situés sous sa face supérieure 70. Les moyens de blocage peuvent être escamotés par un bouton de commande 108 affleurant la face supérieure de la table coulissante 68 à travers un trou 110 (voir figure 3). Comme représentés sur la figure 5 les moyens d'escamotage sont en effet constitués d'un crochet (non représenté) rappelé élastiquement pour coopérer avec des trous formant gâches 112 percés dans la plaque horizontale 66 du bloc téléscopique 54 (voir figure 5).

Chaque trou 112 permet en recevant le crochet de bloquer la table coulissante 68 dans une position donnée. En enfonçant le bouton 108 dans le trou 110, à l'encontre du rappel élastique du crochet, celui-ci sort des trous 112, ce qui permet de faire coulisser la table coulissante 68.

Comme on le voit sur la figure 5, la paroi verticale située entre la plaque 66 et la face supérieure 56 du bloc téléscopique, ainsi que la plaque 66 sont munies de glissières en T destinées à coopérer avec des gorges en T prévues dans la table coulissante 68 (représentée en traits discontinus) pour guider le coulissement de celle-ci.

En se reportant à nouveau à la figure 1 on constate que sous les montants 10A et 10B sont situés deux tubes profilés 114A et 114B. A leur extrémité arrière les tubes 114A et 114B sont supportés par des patins 116A et 116B (voir figure 2). L'extrémité avant des tubes 114A et 114B est ouverte pour recevoir une barre coulissante 118A et 118B respectivement supportée par des patins analogues aux patins 116A et 116B.

Par coulissement des barres 118A et 118B on peut agrandir vers l'avant la surface portante du châssis, ce qui accroît la stabilité de l'ensemble en position de travail.

Sur le tube profilé 114B sont prévues deux roulettes 120 et 122 destinées à faciliter le déplacement de l'ensemble, qui peut être soulevé par une poignée 121A située sur la face externe du montant 10A (voir fig. 1).

Une seconde poignée 121B est également prévue sur la face externe du montant 10B pour permettre, en position de rangement, le transport de l'ensemble lorsque celui-ci ne peut être déplacé à l'aide des roulettes.

Dans la suite nous décrivons différents outils amovibles destinés à être utilisés sur l'ensemble de support 2 lorsque le bloc de travail 6 est en position de travail.

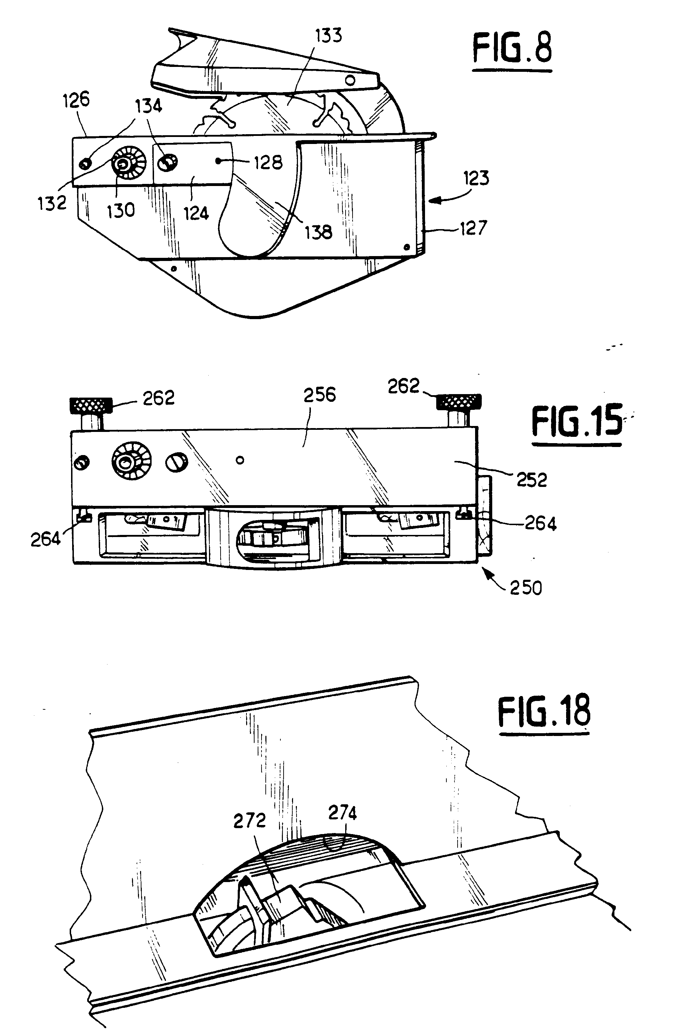

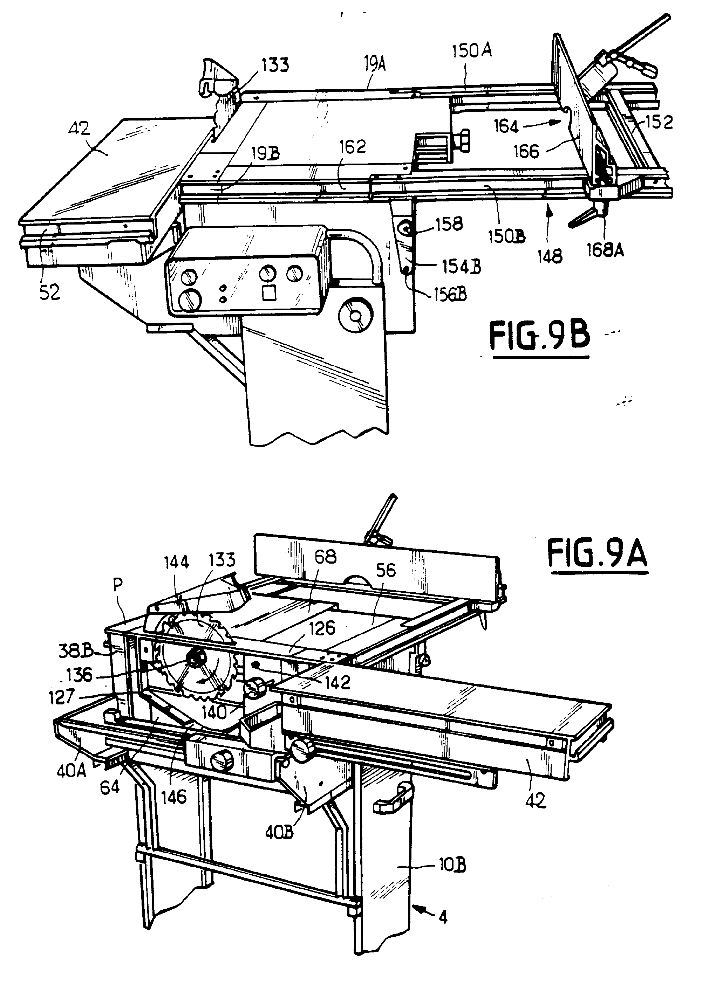

Pour l'utilisation en scie circulaire, on utilise un outil amovible 123 appelé par la suite scie qui est représenté sur la figures 8. La scie 123 comporte un corps creux possédant une face arrière 124 et une face supérieure 126 planes et perpendiculaires entre elles ainsi que des parois latérales 127, la face avant étant ouverte (voir Fig 9A). Cette face avant peut être fermée par un capot.

La face arrière 124 est destinée à être serrée sur la face de référence F du bloc téléscopique 54.

A cet effet, la face 124 comporte un trou taraudé 128 destiné à coopérer avec la tige filetée 104 de la table coulissante 68. De plus, un arbre 130 fait saillie sur la face 124. Il est destiné à pénétrer dans l'arbre creux 72 du bloc téléscopique 54 (voir figure 3) et comporte une collerette dentée 132 destinée à coopérer avec la couronne 74 de l'arbre creux 72 pour assurer la rotation de la lame de scie 133 qui fait saillie au-dessus de la face 126 à travers une ouverture de celle-ci. La lame 133 est située dans un plan parallèle à la face arrière 124.

Deux tétons cylindriques 134 font également saillie sur la face 124, leur axe étant perpendiculare à celle-ci. Les tétons 134 sont destinés à pénétrer dans les trous 76 de la face F (voir figure 3) pour assurer le positionnement de l'outil.

L'axe de rotation 136 (voir Fig 9A) de la lame 133 est parallèle à l'arbre 130, ce dernier l'entraînant en rotation à l'aide par exemple d'une transmission par courroie (non représentée).

L'arbre de rotation 136 est monté mobile dans un logement en forme de secteur circulaire 138 (voir figure 8) s'étendant vers l'avant à partir de la face arrière 124 et centré sur l'arbre 130. L'arbre de rotation 136 est mis en mouvement dans le logement 138 à l'aide d'un dispositif habituel (non représenté) commandé par un organe de commande 140 situé sur la face avant de la scie 123 (voir figure 9A). Une vis de blocage 140 bloque l'arbre 136 en position dans le logement 138.

La position de l'arbre 136 dans le logement 138 détermine la hauteur à laquelle la lame 133 fait saillie au-dessus de la plaque 126 c'est-à-dire la hauteur du trait de scie.

Un protecteur 144 conventionnel (voir figure 8) est prévu.

On notera que les parois latérales 127 comportent une partie verticale prolongée d'une partie inclinée vers le bas en direction d'un plan vertical médian. Les parties inclinées ne se rejoignent pas (voir Fig 9A), laissant ainsi un passage 146 situé sous l'arbre 136 pour laisser tomber la sciure pénétrant à l'intérieur du corps de scie lors de son utilisation.

Pour l'utilisation en sciage (voir figures 9A et 9B), le bloc téléscopique 54 est positionné dans sa position la plus basse, dans laquelle la face supérieure 56 se trouve dans le plan P.

La table coulissante 68 est bloquée à l'aide d'un des trous 112 de façon que sa face avant soit coplanaire à la face de référence F.

Pour pouvoir installer la scie 123, la table mobile 42 est chariotée jusqu'à un des prolongements 40A ou 40B et dans cette position peut être pivotée autour de son axe de pivotement de manière à s'étendre parallèlement à la face F et vers l'extérieur du châssis 4, pour dégager l'accès à la face F et à la face plane 64. Ceci étant réalisé, la face arrière 124 de la scie 123 est positionnée et serrée contre la face F à l'aide de la tige filetée 104.

Dans cette position la face supérieure de la plaque 126 de la scie 123 se trouve dans le plan P. Elle recouvre la partie supérieure ouverte du logement L prévu dans le bloc téléscopique.

En se reportant à la figure 9B on constate qu'un accessoire amovible 148 destiné à agrandir le plan de travail est installé. Cet accessoire est constitué de deux glissières 150A et 150B parallèles entre elles et reliées par une traverse 152 à proximité d'une première extrémité. Leur seconde extrémité comporte un support 154A, 154B respectif s'étendant perpendiculairement aux glissières vers le bas. Les supports 154A et 154B sont montés rotatifs autour d'un axe horizontal parallèle à l'axe X-X sur les faces externes des plaques latérales 22A et 22B (voir Fig. 4).

L'axe de rotation est déterminé par deux tétons cylindriques 156A, 156B dont un seul est représenté sur la figure 9B, faisant saillie sur la face externe des plaques latérales 22A et 22B respectivement.

Un organe de blocage 158A, 158B coopérant avec un trou borgne 160A, 160B (voir figure 2) prévu sur la face externe des plaques latérales 22A et 22B permet de bloquer l'accessoire 148 de façon telle que les glissières soient horizontales, leur face supérieure étant située dans le plan P. Il est à noter que les glissières 150A et 150B ont le même profil que la glissière 52 de la table mobile 42 et que les glissières 19A et 19B.

En se reportant à la figure 4 on constate que la face supérieure 56 du bloc téléscopique 54 comporte une glissière 162 de même profil que les glissières précédentes et décalée vers l'extérieur par rapport à la paroi 58B du bloc téléscopique 54 de manière à venir dans le prolongement de la glissière 19B lorsque le bloc 54 est en position basse. Dans cette position la glissière 150B prolonge la glissière 162 et la glissière 150A prolonge la glissière 19A pour former deux trajets de coulissement parallèles et horizontaux pour un guide de sciage 164 (voir figure 9B). Le guide 164 possède une face avant plane 166 parallèle à la lame de scie 133. Des organes de blocage 168A, 168B dont seul l'organe 168A est représenté permettent de fixer la position du guide 164 le long des trajets de coulissement. L'ensemble ainsi installé comporte tous les éléments nécessaires au sciage, à savoir une scie 123, un guide 164 parallèle à la lame de scie 163, un protecteur de lame de scie 144, une table mobile 42 pouvant être positionnée angulairement par rapport à la lame de scie 133 et chariotée entre les prolongements 40A et 40B.

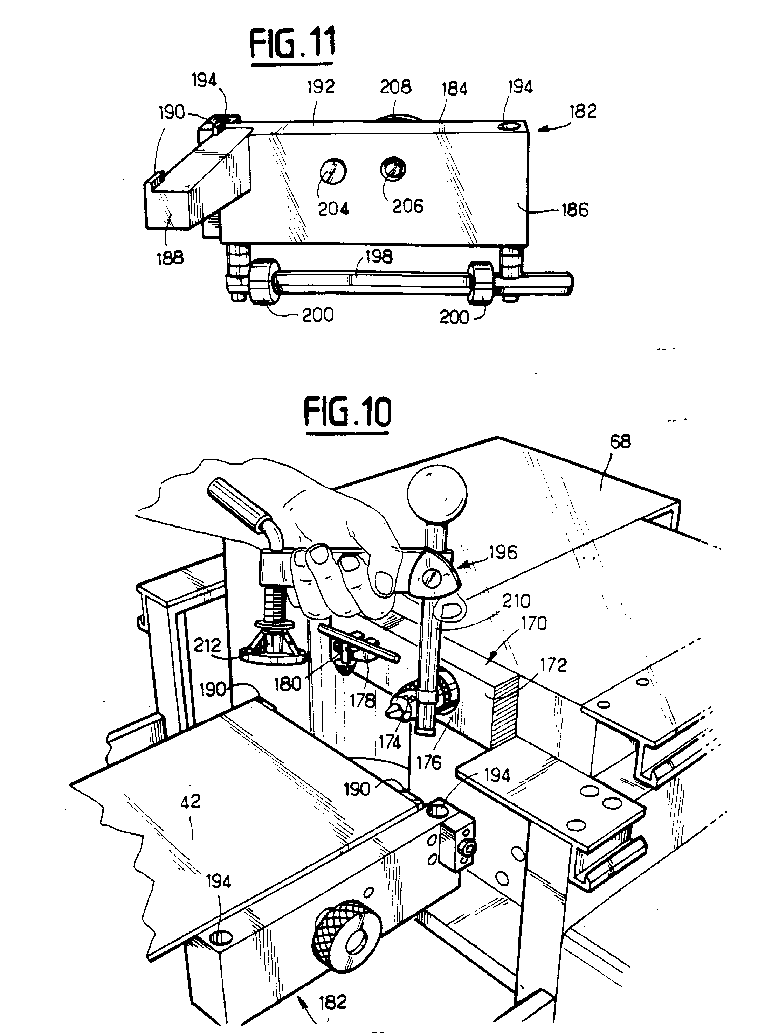

Pour une utilisation en perçage, mortaisage, tenonnage, la table coulissante 68 est positionnée comme pour le sciage, c'est-à-dire que sa face avant est dans le plan de la face F (voir Fig 10).

Dans cette utilisation, un outil de perçage 170 possédant un corps 172 en forme de parallélépipède rectangle est fixé dans le logement L du bloc téléscopique.

A cet effet la face arrière du corps 172 comporte un ensemble de moyens de fixation sur le bloc et d'entraînement en rotation de l'outil qui sont identiques à ceux de la scie, à savoir un arbre, deux tétons cylindriques et un trou taraudé. Ces moyens de fixation et d'entraînement coopèrent comme ceux de la scie avec les moyens prévus sur la face F et la table coulissante 68.

Il faut noter que chaque outil amovible comporte des moyens de fixation et d'entraînement en rotation identiques et ceux-ci ne seront donc plus décrits en détail par la suite.

Sur la figure 10 on constate que l'arbre d'entraînement de l'outil traverse le corps et comporte une partie en saillie vers l'avant munie d'un mandrin 174. Sur la face avant 176, un support 178 de clé de mandrin 180 fait également saillie.

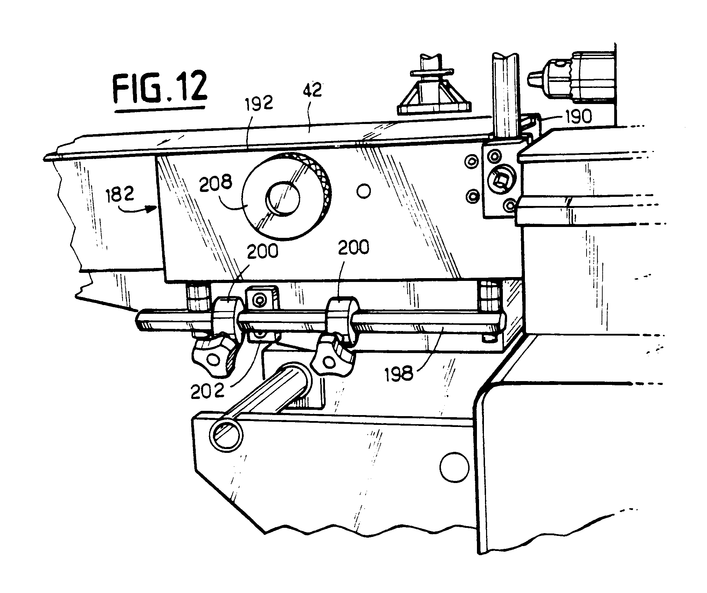

Dans une telle utilisation, la table mobile 42 est équipée d'un accessoire amovible 182 représenté sur les figures 11 et 12.

Sur la figure 11 on constate que l'accessoire 182 comporte un corps parallélépipédique rectangle possédant une face principale avant 184 et une face principale arrière 186. A proximité de l'angle supérieur gauche en regardant la figure 11 une potence 188 s'étend perpendiculairement à la face arrière 186 vers l'arrière. La face supérieure de la potence 188 est munie de deux butées 190 destinées à venir en appui contre le petit côté 48 de la face supérieure de la table mobile 42 (voir figure 10) et souvent de butée au bois à travailler. La face supérieure de la potence 188 est dans le même plan que la face supérieure 192 du corps de l'outil. Ces faces sont destinées à venir en appui sous la face supérieure de la table mobile 42. La face supérieure 192 du corps comporte deux trous borgnes 194 destinés à recevoir un ensemble de serrage du bois 196 comme mieux représenté sur la figure 10.

Sous la face inférieure du corps s'étend une tige de réglage 198 qui est horizontale et espacée de la face inférieure du corps. Cette tige comporte deux coulisseaux 200 pouvant coulisser entre les extrémités de la tige 198. Les coulisseaux 200 coopèrent avec une butée 202 (voir Fig 12) fixée sur la paroi latérale correspondante de la table mobile 42. En positionnant les coulisseaux 200 de part et d'autre de la butée 202 on détermine le coulissement possible de la table 42 sur son support 47. Ce mouvement de coulissement permet de déterminer la longueur dont le foret porté par le mandrin pourra pénétrer dans la pièce de bois qui est à usiner.

Sur la face arrière de l'accessoire 182 fait saillie un téton de positionnement 204 destiné à coopérer avec un trou prévu dans la paroi latérale de la table 42. Le corps est traversé par une vis 206 commandée à l'aide d'une tête 208 (voir figure 12), la vis 206 coopérant avec un trou taraudé prévu dans la face latérale de la table mobile pour fixer l'accessoire 182.

Chaque trou 194 est destiné lorsque l'accessoire 182 est fixé le long de la table mobile 42 à recevoir une tige cylindrique 210. La tige 210 comporte de manière usuelle une partie destinée à être bloquée dans le trou 194 et comporte également un ensemble coulissant sur la tige 210 et muni d'une vis de serrage 212 destinée à appliquer la pièce de bois sur la face supérieure de la table mobile 42 de manière habituelle.

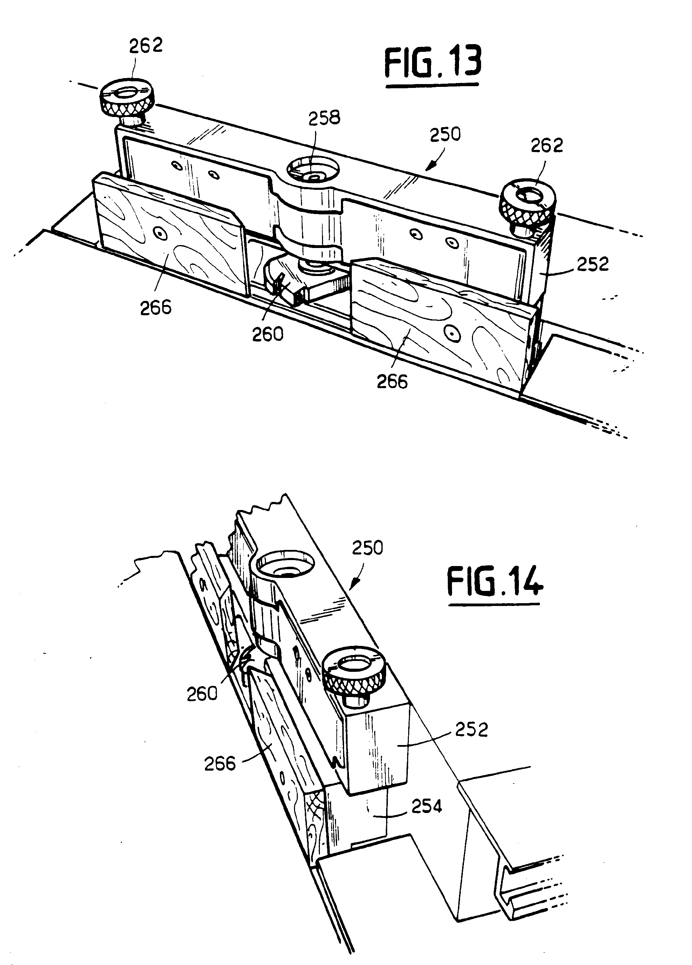

Sur les figures 13, 14 et 15 est représenté un outil formant toupie à axe de rotation vertical 250 appelé par la suite toupie verticale. La toupie verticale 250 comporte un corps en forme de parallélépipède rectangle composé d'une partie haute 252 et d'une partie basse 254 (voir figure 14) montée coulissante d'avant en arrière sur la partie haute. La partie haute 252 comporte une face arrière plane 256 comportant des moyens de fixation et d'entraînement identiques à ceux de la scie. La face arrière 256 est destinée à être serrée contre la face de référence F et la face avant de la table coulissante. A cet effet la table coulissante doit être dans la même position que pour la scie.

La partie haute est traversée par un arbre porte-toupie vertical 258 (voir figure 13). L'arbre 258 est relié à l'arbre d'entraînement par une transmission classique (non représentée) située à l'intérieur de la partie haute 252.

L'arbre 258 fait saillie vers le bas à partir de la face inférieure de la partie haute 252 et reçoit une toupie 260 qui possède un diamètre supérieur à l'épaisseur de la partie haute.

L'arbre 258 est situé de façon à être à peu près coaxial à l'évidement 62 du bloc téléscopique lorsque la toupie verticale 250 est serrée contre la face de référence F. Dans cette disposition, la toupie 260 peut tourner sans accrocher la face de référence F ou la partie plane 64.

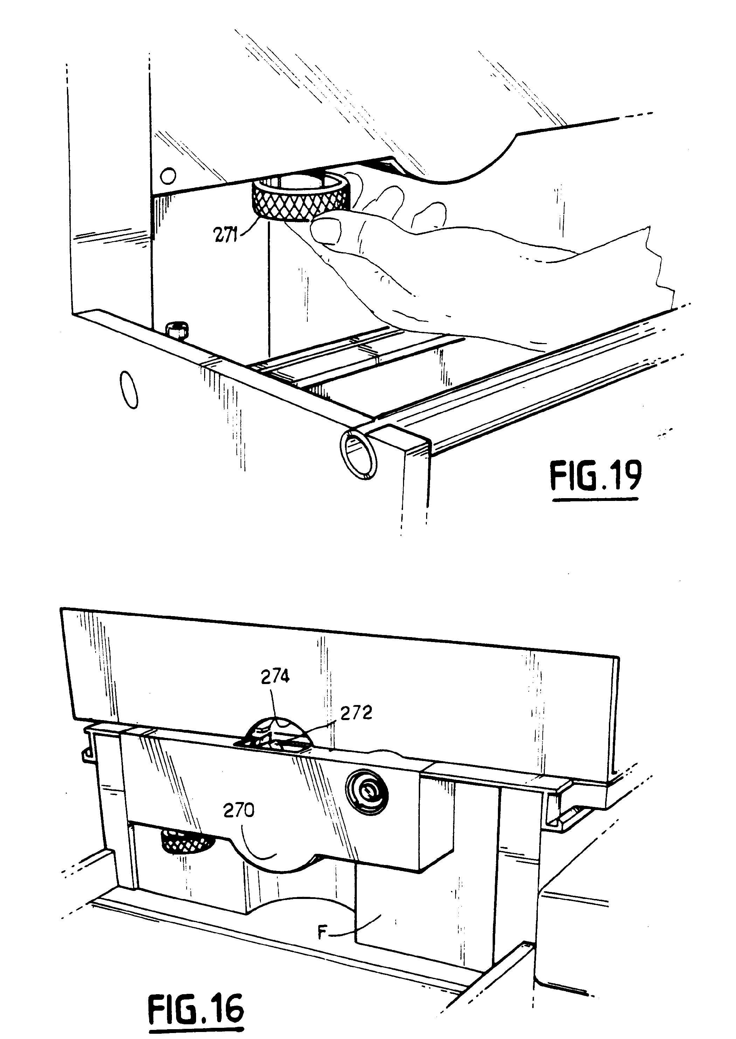

La partie basse 254 de la toupie verticale 250 est constituée d'un bloc monté coulissant sur la partie haute 252, et comportant deux éléments espacés l'un de l'autre pour permettre la rotation de la toupie et, leur coulissement vers l'avant ou l'arrière étant commandé par deux boutons molletés 262 (voir figure 13). A cet effet la face inférieure de la partie haute est munie de deux nervures en T 264 (voir figure 15) qui coopèrent avec des rainures complémentaires prévues dans chacun des blocs de la partie basse. Sur la face avant de chacun des blocs de la partie basse est fixé un élément de guidage 266, comme il est habituel sur toutes les toupies d'axe vertical.

Le coulissement des blocs de la partie basse permet de positionner les pièces de bois 266 par rapport à la périphérie de la toupie et détermine ainsi la profondeur de passe lors de l'utilisation de la toupie.

Pour l'utilisation en toupie d'axe horizontal, on utilise un outil 270 appelé par la suite toupie horizontale (voir Fig 16). Dans cette utilisation la table coulissante est dans la même position que pour le sciage. La toupie horizontale 270 comporte un carter creux dont la face arrière est munie des moyens de fixation et de mise en rotation analogues à ceux déjà décrits, cette face arrière venant en appui sur la face de référence F et étant serrée contre la face avant de la table coulissante par la tige filetée 104. Le carter creux comporte une face supérieure qui est située dans le plan P lorsque la toupie verticale est fixée contre la face F et la table coulissante. Le carter a une forme générale de parallélépipède rectangle dont les faces principales possèdent une hauteur inférieure au diamètre de la toupie 272 (voir figure 16). L'intérieur du carter comporte une transmission entre l'arbre entraîné par le moteur électrique et l'axe de la toupie, ainsi qu'un dispositif de positionnement en hauteur de l'arbre de la toupie. Ce dispositif permet d'obtenir une saillie plus ou moins importante de la toupie à travers une ouverture prévue sur la face supérieure du carter. Ce dispositif est mis en oeuvre à l'aide d'un bouton de commande 271 comme on peut le voir sur la figure 19, pour déterminer la hauteur de passe.

On notera que le guide déjà utilisé en sciage est positionné à proximité de la toupie horizontale et comporte une découpe 274 lui permettant de venir se situer au-dessus de la toupie (voir figure 18).

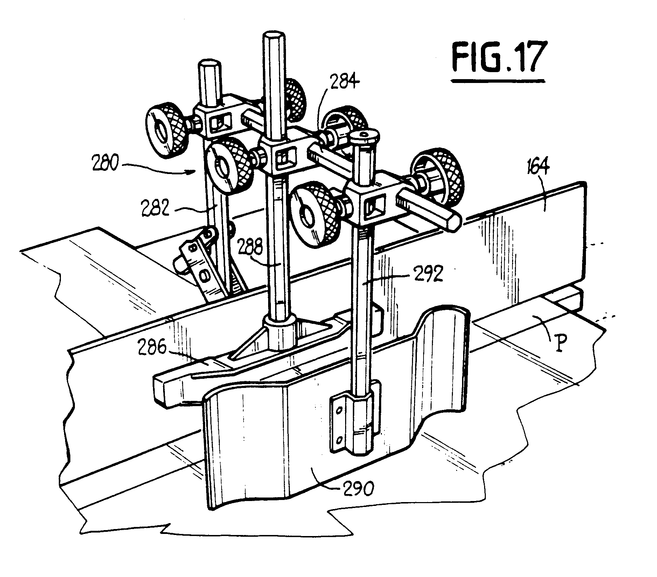

En se reportant à la figure 17, on constate qu'un protecteur 280 peut être fixé sur la face arrière du guide 164.

Le protecteur comporte une tige hexagonale verticale 282 fixée sur la face arrière du guide 164, sur laquelle est montée coulissante une potence horizontale 284.

Un organe d'appui vertical 286 est monté sur la potence 284 de manière habituelle à l'aide d'une tige 288.

L'organe 286 est positionné à proximité de la face avant du guide 164. Il est destiné à appuyer verticalement sur la pièce de bois à usiner et à maintenir la face inférieure de celle-ci contre le plan P.

Un organe d'appui horizontal 290 est monté sur la potence 284 à l'aide d'une tige 292.

L'organe d'appui horizontal 290 est situé au-delà de l'organe 286 à partir de la face avant du guide 164.

L'organe 290 est constitué de manière habituelle d'une lame formant ressort destinée à serrer la pièce de bois à usiner contre la face avant du guide 164.

Les organes 286 et 290 permettent ainsi un positionnement correct de la pièce de bois et empêchent le contact de la main de l'utilisateur avec la toupie, comme cela est imposé par les normes de sécurité.

Pour l'utilisation de l'ensemble support en rabotage ou dégauchissage on utilise un outil 300 appelé par la suite rabot (voir figure 20).

Sur la figure 20 on constate que le rabot 300 possède une forme générale de parallélépipède rectangle délimité par une paroi arrière 302, deux parois latérales 304A et 304B, une paroi avant 306 et une paroi supérieure 308 (voir figure 21). La face inférieure du parallélépipède est ouverte.

La paroi avant 306 comporte une partie faisant saillie au-delà de la face latérale 304B, et comporte un trou taraudé 308 analogue au trou taraudé 128 de la scie 123, et destiné à coopérer par la suite avec la tige 104 du bloc téléscopique.

La face externe de la paroi arrière 302 comporte les autres éléments composant les moyens de fixation et d'entraînment de l'outil. Ces éléments sont analogues à ceux des autres outils, c'est-à-dire un arbre creux 310 muni d'une collerette dentée 312 et deux tétons cylindriques 314. Ces éléments sont destinés à positionner la paroi arrière 302 contre la face de référence F du bloc téléscopique comme cela a été décrit précédemment et le vissage de la tige filetée 104 dans le trou taraudé 308 entraîne le serrage du rabot 300 contre la face F et son maintien en position.

Le rabot 300 comporte une paroi transversale 316 parallèle à la paroi arrière 302 et située plus près de cette dernière que de la paroi avant 306.

Entre la paroi transversale 316 et la paroi avant 306 sont montés rotatifs un cylindre lisse 318, un porte-lames 320 cylindrique et un cylindre crénelé 322. Les axes de ces cylindres sont parallèles entre eux et aux parois latérales du rabot 300, le cylindre crénelé 322 et le cylindre lisse 318 étant situés de part et d'autre du porte-lames, le cylindre lisse étant entre la paroi latérale 304A et le porte-lames.

Les cylindres crénelés et lisses sont situés de façon telle que leur génératrice inférieure soit à peu près dans le même plan que la génératrice inférieure du porte-lames qui se trouve elle-même à peu près dans le plan de la face inférieure ouverte du parallélépipède rectangle constitué par le rabot.

Le porte-lames 320 comporte un prolongement axial (non représenté) traversant la paroi transversale 316 et faisant saillie vers l'arrière à partir de celle-ci, le prolongement étant destiné à être entraîné par l'arbre creux 310. A cet effet le prolongement est relié par emmanchement serré dans un manchon cylindrique 324 venu de matière avec la collerette dentée 312 et faisant saillie sur la paroi arrière 302 vers la paroi transversale 316.

L'extrémité libre du manchon 324 est espacée de la face arrière de la paroi transversale 316. Dans l'espace ainsi défini une bague en matière plastique très résistante à l'usure, par exemple en polyacétal est montée libre en rotation autour du prolongement du porte-lames 320.

La bague est étagée, l'étage 326 de plus grand diamètre étant adjacent à la face arrière de la paroi transversale 316 et l'étage 328 de plus petit diamètre étant éloigné de ladite face arrière et délimitant un épaulement radial 330.

Les cylindres lisses et crénelés 318 et 322 comportent un prolongement traversant la paroi transversale 316 et faisant saillie vers l'arrière à partir de celle-ci. Deux roues dentées identiques 332a et 332b sont montées respectivement sur le prolongement de l'arbre lisse 318 et de l'arbre crénelé 322. Le plan des roues dentées étant à peu près dans le plan médian de l'étage 328 de la bague.

Une chaîne sans fin entoure les roues dentées 322A et 322B ainsi que l'étage 328 de la bague. Un brin mou 336 de la chaîne est en contact avec la partie supérieure de l'étage 328, l'épaulement 330 empêchant un contact entre la chaîne et la paroi transversale 316.

Ce dispositif permet d'entraîner les cylindres lisses et crénelés dans une rotation de même sens et de même vitesse angulaire.

Cette rotation est obtenue à l'aide d'un moteur auxiliaire 340, par exemple du type moteur électrique alimenté en courant continu de 12 V par exemple, fixé sur la face avant de la paroi avant 306.

A cet effet, l'arbre lisse 318 traverse la paroi avant 306 et est accouplé au moteur 340 de manière conventionnelle.

Lors de la mise en fonctionnement du moteur 340, celui-ci entraîne le cylindre lisse 318 et par l'intermédiaire de la chaîne le cylindre crénelé 322 qui est destiné à faire avancer la pièce de bois rabotée vers le porte-lames 320, comme cela est prévu dans les raboteuses.

Un protecteur de lames 342 est monté sur la face avant de la paroi avant 306. Le protecteur 342 comporte un bloc support 344 (voir figure 22) solidaire de deux tiges cylindriques 346 reçues coulissantes avec friction dans deux trous 348 traversant la paroi avant 306 du rabot (voir figure 21).

Une poignée 350 est montée coulissante verticalement sur le bloc support 344 et comporte un pont protecteur 352 (voir figure 22) s'étendant en porte-à-faux pour se situer au-dessus du porte-lames 320.

Ainsi le pont protecteur 352 peut être translaté verticalement et horizontalement au-dessus du porte-lames 320 pour prendre une position adaptée à la pièce à usiner.

Pour utiliser le rabot 300 en rabotage ou en dégauchissage il est nécessaire de positionner la table coulissante 68 dans sa position la plus avancée comme représenté sur la figure 4.

Dans cette position la face arrière de la paroi avant 306 du rabot 300 est au contact de la face avant de la table coulissante 68.

Le rabot 300 s'étend alors le long de la paroi latérale de la table coulissante, le porte-lames étant parallèle à ladite paroi latérale, et perpendiculaire à la face F.

Dans le cas d'un rabotage, le bloc téléscopique est surélevé par rapport au plan P comme représenté sur la figure 4, d'une distance adaptée à l'épaisseur de la pièce de bois à raboter. Dans cette utilisation la table mobile 42 est située entre les prolongements 40A et 40B des plaques latérales 22A et 22B du bloc de travail. La face supérieure de la table mobile 42 sert d'appui pour la pièce de bois qui est introduite sous la table mobile 68 du côté de la plaque latérale 22 du bloc de travail jusqu'à ce que le cylindre crénelé entraîne le bois dans le sens de la flèche Fᵣ de la figure 4 pour qu'il soit raboté par la ou les lames du porte-lames.

Pour un dégauchissage, le bloc téléscopique muni du rabot 300 est amené légèrement au-dessus du plan P, la différence de niveau correspondant à l'épaisseur de bois que l'on désire enlever. La table mobile est positionnée perpendiculairement au porte-lames, le petit côté ne comportant pas de glissière étant adjacent à la face latérale 304A du rabot. Ainsi la table mobile sert de table d'entrée de dégauchisseuse, la pièce de bois étant mise en mouvement manuellement par un opérateur dans la direction représentée par la flèche F_{d} de la figure 22. La table coulissante 68 légèrement surélevée par rapport au plan P donc à la table mobile 42 sert de table de sortie pour la pièce de bois.

## Revendications

1. Machine à bois à outils multiples modulaires ayant un ensemble support (2) comportant :
- un châssis (4) possédant une assise rectangulaire dont le petit côté constitue la profondeur et le grand côté la longueur du châssis,
- deux montants plats (10A, 10B) s'étendant à la verticale de chacun des petits côtés de l'assise et déterminant la hauteur,
- un bloc de travail (6) comportant des moyens de positionnement d'un desdits outils
- le châssis délimitant un volume parallélépipédique rectangle recevant le bloc de travail (6),
- le bloc de travail (6) ayant la forme d'un parallélépipède rectangle, dont le volume est délimité par deux faces principales parallèles supérieure et inférieure (16, 20), une face avant (29), deux faces latérales et une face arrière (24),
- les faces principales ayant une longueur légèrement inférieure à la longueur du châssis, le bloc de travail étant reçu dans le châssis dans une position de rangement telle que les faces latérales sont adjacentes aux montants et les faces principales s'étendent à peu près à la verticale des grands côtés de l'assise,
- le bloc de travail (6) étant monté pivotant entre les montants (10A, 10B) autour d'un axe horizontal (X-X) parallèle à la longueur du châssis, entre ladite position de rangement et une position de travail dans laquelle les faces dites principales (16, 20) du bloc de travail s'étendent horizontalement, la face principale supérieure (16) étant située au-dessus des extrémités libres des montants (10A, 10B) et constituant un plan de travail horizontal, le bloc recevant un moteur (M), des moyen de transmission entre le moteur et des moyens d'entraînement en rotation d'un desdits outils S, des moyens de positionnement du plan de travail par rapport au châssis, des moyens de réception d'au moins ledit outil, des moyens de fixation de l'outil, des moyens de maintien en position de travail,
- le bloc de travail étant constitué d'un bâti comportant deux plaques latérales (22A, 22B) constituant les faces latérales du bloc de travail, caractérisée en ce qu'un bloc télescopique (54) comportant un pied supportant un plateau constituant une partie du plan de travail est monté coulissant verticalement entre les plaques latérales, et en ce que le moteur (M) est reçu dans l'épaisseur du bloc (6).

2. Machine à bois selon la revendication 1 caractérisée en ce que le pied comporte une paroi avant constituant la face de référence (F) et deux parois latérales (58A, 58B) s'étendant vers l'arrière à partir de celle-ci et adjacentes aux plaques latérales (22A, 22B) entre lesquelles elles coulissent.

3. Machine à bois selon la revendication 1 ou 2, caractérisée en ce que le moteur est fixé sur le bloc télescopique entre les parois du pied et sous le plateau.

4. Machine à bois selon l'une quelconque des revendications 1 à 3, caractérisée en ce que le plateau comporte une table (68) coulissante dans une direction perpendiculaire à la face de référence (F).

5. Machine à bois selon l'une quelconque des revendications 1 à 4, caractérisée en ce que les plaques latérales (22A, 22B) du bloc de travail (6) sont montées rotatives autour de l'axe de rotation (X-X) de celui-ci par l'intermédiaire de deux demi-arbres coaxiaux faisant saillie vers l'extérieur de chacune des plaques et reçus dans des paliers coaxiaux (30A, 30B) complémentaires prévus sur les montants (10A, 10B).

6. Machine à bois selon l'une quelconque des revendications précédentes, caractérisée en ce que le bloc de travail (6) comporte une table mobile (42) montée pivotante sur un support (47) coulissant sur la longueur de la face avant (29) à proximité de l'arête commune de la face avant (29) et de la face principale inférieure (20), la table mobile (42) étant reçue en position de rangement dans un logement destiné à recevoir un outil, la table étant munie d'organes de blocage en position.

7. Machine à bois selon l'une quelconque des revendications précédentes caractérisée en ce que l'assise du châssis est supportée par deux profilés creux (14A, 14B) situés sous les petits côtés de l'assise et recevant chacun une barre (118A, 118B) télescopique horizontalement pour accroître en position de travail la surface portante du châssis.

8. Machine à bois selon la revendication 7, caractérisée en ce que des roulettes (120, 122) sont fixées sur l'un des profilés creux (114B) et une poignée (121A) est fixée sur la face externe du montant opposé aux roulettes.

9. Machine à bois selon l'une quelconque des revendications précédentes, caractérisée en ce qu'elle comporte une unité de commande montée pivotante autour d'un axe situé le long d'un bord vertical d'un montant (10B), entre une position repliée dans laquelle elle est reçue dans l'épaisseur du bloc de travail en position de rangement et une position dépliée dans laquelle elle est située à l'extérieur du bloc de travail.

## Patentansprüche

1. Holzbearbeitungsmaschine mit mehreren modularen Werkzeugen und einer Trageinheit (2), bestehend aus:
- einem Gestell (4) mit einer rechteckigen Grundplatte, deren kleine Seite die Tiefe und deren große Seite die Länge des Gestells bildet,
- zwei flache Ständer (10A, 10B), die sich in der Vertikalen jeder der kleinen Seiten der Grundplatte erstrecken und die Höhe festlegen,
- einen Arbeitsblock (6) mit Mitteln zur Positionierung eines der Werkzeuge,
- wobei das Gestell ein quaderförmiges Volumen abgrenzt, das den Arbeitsblock (6) aufnimmt,
- der Arbeitsblock (6) die Form eines Quaders hat, dessen Volumen durch zwei parallele Hauptseiten, eine obere und eine untere (16, 20), eine Vorderseite (29), zwei Seitenflächen und einer Rückseite (24) abgegrenzt ist,
- die Länge der Hauptseiten etwas kleiner als die Länge des Gestells ist und der Arbeitsblock in einer eingefahrenen Stellung im Gestell aufgenommen ist, bei welcher die Seitenflächen an die Ständern angrenzen und die Hauptseiten sich ungefähr in der Vertikalen der großen Seiten des Sockels erstrecken,
- der Arbeitsblock (6) zwischen den Ständern (10A, 10B) um eine zur Länge des Gestells parallele horizontale Achse (X-X) zwischen der eingefahrenen Stellung und einer Arbeitsstellung schwenkbar montiert ist, in der die Hauptseiten (16, 20) des Arbeitsblocks sich horizontal erstrecken, wobei die obere Hauptseite (16) über den freien Enden der Ständer (10A, 10B) gelegen ist und eine horizontale Arbeitsebene bildet, wobei der Block einen Motor (M), Übertragungsmittel zwischen dem Motor und Mitteln zum Drehantrieb eines der Werkzeuge, Mittel zur Positionierung der Arbeitsebene bezüglich des Gestells, Mittel zur Aufnahme wenigstens dieses Werkzeugs, Mittel zur Befestigung des Werkzeugs, Mittel zum Halten in Arbeitsstellung aufnimmt,
- der Arbeitsblock aus einem Rahmen besteht, der zwei seitliche Platten (22A, 22B) aufweist, die die Seitenflächen des Arbeitsblocks bilden,
dadurch gekennzeichnet, daß ein teleskopischer Block (54) mit einem Fuß, der eine Arbeitsplatte trägt, die einen Teil der Arbeitsebene bildet, zwischen den seitlichen Platten vertikal verschiebbar montiert ist und daß der Motor (M) in der Dicke des Blocks (6) aufgenommen ist.

2. Holzbearbeitungsmaschine nach Anspruch 1, dadurch gekennzeichnet, daß der Fuß eine die Bezugsfläche (F) bildende Vorderwand und zwei Seitenwände (58A, 58B) umfaßt, die sich von dieser aus nach hinten erstrecken und an die seitlichen Platten (22A, 22B) angrenzen, zwischen den sie gleiten.

3. Holzbearbeitungsmaschine nach Anspruch 1 oder 2, dadurch gekennzeichnet, daß der Motor an dem teleskopischen Block zwischen den Wänden des Fußes und unter der Arbeitsplatte befestigt ist.

4. Holzbearbeitungsmaschine nach einem der Ansprüche 1 bis 3, dadurch gekennzeichnet, daß die Arbeitsplatte einen Tisch (68) umfaßt, der in einer zur Bezugsfläche (F) senkrechten Richtung verschiebbar ist.

5. Holzbearbeitungsmaschine nach einem der Ansprüche 1 bis 4, dadurch gekennzeichnet, daß die seitlichen Platten (22A, 22B) des Arbeitsblocks (6) um dessen Drehachse (X-X) über zwei koaxiale Halbwellen drehbar montiert sind, die aus jeder Platte nach außen hervorstehen und in an den Ständern (10A, 10B) vorgesehenen, ergänzenden koaxialen Lagern (30A, 30B) aufgenommen sind.

6. Holzbearbeitungsmaschine nach einem der vorhergehenden Ansprüche, dadurch gekennzeichnet, daß der Arbeitsblock (6) einen beweglichen Tisch (42) umfaßt, der verschwenkbar auf einem Träger (47) montiert ist, der auf der Länge der Vorderseite (29) in Nähe der gemeinsamen Kante der Vorderseite (29) und der unteren Hauptseite (20) verschiebbar ist, wobei der bewegliche Tisch (42) in eingefahrener Stellung in einem zur Aufnahme eines Werkzeugs bestimmten Raum aufgenommen ist und mit Organen zur Blockierung in seiner Stellung versehen ist.

7. Holzbearbeitungsmaschine nach einem der vorhergehenden Ansprüchen, dadurch gekennzeichnet, daß die Grundplatte des Gestells von zwei Hohlprofilen (14A, 14B) getragen ist, die unter den kleinen Seiten der Grundplatte angeordnet sind und jeweils eine horizontal teleskopische Stange (118A, 118B) aufnehmen, um die tragende Fläche des Gestells in Arbeitsstellung zu vergrößern.

8. Holzbearbeitungsmaschine nach Anspruch 7, dadurch gekennzeichnet, daß unter einem der Hohlprofile (114B) Rollen (120, 122) befestigt sind und an der Außenfläche des den Rollen entgegengesetzten Ständers ein Griff (121A) befestigt ist.

9. Holzbearbeitungsmaschine nach einem der vorhergehenden Ansprüche, dadurch gekennzeichnet, daß sie eine Bedienungseinheit umfaßt, die um eine längs eines vertikalen Randes eines Ständers (10B) gelegene Achse zwischen einer eingeklappten Stellung, in der sie in der Dicke des Arbeitsblocks in eingefahrener Stellung aufgenommen ist, und einer ausgeklappten Stellung verschwenkbar montiert ist, in der sie außerhalb des Arbeitsblocks gelegen ist.

## Claims

1. Woodworking machine with multiple modular tools having a support assembly (2) comprising:
- a frame (4) with a rectangular base, the short side of which constitutes the depth and the long side the length of the frame,
- two flat uprights (10A, 10B) extending vertically from each of the short sides of the base and determining the height,
- an operating unit (6) including the means for positioning one of the said tools,
- the frame defining a rectangular parallelepipedal volume housing the operating unit (6),
- the operating unit (6) having the form of a rectangular parallelepiped, the volume of which is defined by two upper and lower parallel principal faces (16, 20), a front face (29), two side faces and a rear face (24),
- the principal faces having a length slightly less than the length of the frame, the operating unit being housed in the frame in a storage position such that the side faces are adjacent to the uprights and the principal faces lie approximately vertical to the long sides of the base;
- the operating unit (6) being mounted so as to pivot, between the uprights (10A, 10B), about a horizontal axis (X-X) parallel to the length of the frame, between the said storage position and an operating position in which the so-called principal faces (16, 20) of the operating unit lie horizontal, the upper principal face (16) being situated above the free ends of the uprights (10A, 10B) and constituting a horizontal work surface, the unit housing a motor (M), transmission means between the motor and means for driving one of the said tools in rotation, means for positioning the work surface with respect to the frame, means for receiving at least the said tool, means for fixing the tool, and means for maintaining in the working position,
- the operating unit being formed by a frame comprising two lateral plates (22A, 22B) constituting the lateral faces of the operating unit, characterised in that a telescopic unit (54) having a stand supporting a platform constituting part of the work surface is mounted so as to slide vertically between the lateral plates, and in that the motor (M) is housed in the body of the unit (6).

2. Woodworking machine according to Claim 1, characterised in that the stand has a front wall constituting the reference face (F) and two lateral walls (58A, 58B) extending towards the rear from the said front wall and adjacent to the lateral plates (22A, 22B) between which they slide.

3. Woodworking machine according to Claim 1 or 2, characterised in that the motor is fixed to the telescopic unit between the walls of the stand and below the platform.

4. Woodworking machine according to any one of Claims 1 to 3, characterised in that the platform includes a table (68) sliding in a direction at right angles to the reference face (F).

5. Woodworking machine according to any one of Claims 1 to 4, characterised in that the lateral plates (22A, 22B) of the operating unit (6) are mounted so as to rotate about the axis of rotation (X-X) of the latter by means of two coaxial half-shafts projecting towards the outside of each of the plates and housed in complementary coaxial bearings (30A, 30B) provided on the uprights (10A, 10B),

6. Woodworking machine according to any one of the preceding claims, characterised in that the operating unit (6) includes a moving table (42) mounted so as to pivot on a support (47) sliding over the length of the front face (29) close to the common edge of the front face (29) and lower principal face (20), the moving table (42) being housed, in the storage position, in a housing intended to receive a tool, the table being provided with devices for locking it in position.

7. Woodworking machine according to any one of the preceding claims, characterised in that the base of the frame is supported by two hollow profiled sections (14A, 14B) situated below the short sides of the base and each receiving a telescopic bar (118A, 118B) horizontally in order to increase, in the operating position, the bearing surface of the frame.

8. Woodworking machine according to Claim 7, characterised in that rollers (120, 122) are fixed to one of the hollow profiled sections (114B) and a handle (121A) is fixed to the external face of the upright opposite to the rollers.

9. Woodworking machine according to any one of the preceding claims, characterised in that it includes a control unit mounted so as to pivot about a shaft situated along one vertical edge of an upright (10B), between a folded position in which it is housed in the body of the operating unit in the storage position and an unfolded position in which it is situated outside the operating unit.
